(19) **Europäisches Patentamt**

**European Patent Office**

**Office européen des brevets**

(11) Veröffentlichungsnummer: **0 288 806 B1**

(12) **EUROPÄISCHE PATENTSCHRIFT**

(45) Veröffentlichungstag der Patentschrift: **25.09.91**

(21) Anmeldenummer: **88105656.8**

(22) Anmeldetag: **08.04.88**

(51) Int. Cl.⁵: **G01P 13/00**

(54) Wärmeübergangsmessgerät, insbesondere Strömungswächter.

(30) Priorität: 27.04.87 DE 3713981

(43) Veröffentlichungstag der Anmeldung:
02.11.88 Patentblatt 88/44

(45) Bekanntmachung des Hinweises auf die
Patenterteilung:
25.09.91 Patentblatt 91/39

(84) Benannte Vertragsstaaten:
CH DE FR GB LI SE

(56) Entgegenhaltungen:
DE-U- 8 626 547      FR-A- 2 125 374
FR-A- 2 253 216      FR-A- 2 276 592
US-A- 3 898 638      US-A- 4 220 950
US-A- 4 311 047

IEEE TRANSACTIONS ON ELECTRON DEVI-
CES, Band ED-33, Nr. 10, Oktober 1986, Seiten 1470-1474, IEEE, New York, US; G.N.
STEMME: "A monolithic gas flow sensor with
polyimide as thermal insulator"

(73) Patentinhaber: **Buck, Robert**
**Vogelherdbogen 67**
**W-7992 Tettnang(DE)**

Patentinhaber: **Marhofer, Gerd**
**Beckmannsbusch 67**
**W-4300 Essen-Bredeney(DE)**

(72) Erfinder: **Buck, Robert**
**Vogelherdbogen 67**
**W-7992 Tettnang(DE)**
Erfinder: **Marhofer, Gerd**
**Beckmannsbusch 67**
**W-4300 Essen-Bredeney(DE)**

(74) Vertreter: **Gesthuysen, Hans Dieter, Dipl.-Ing.
et al**
**Patentanwälte Gesthuysen + von Rohr**
**Huyssenallee 15 Postfach 10 13 33**
**W-4300 Essen 1(DE)**

**Beschreibung**

Die Erfindung betrifft ein Wärmeübergangsmeßgerät, insbesondere einen Strömungswächter zur elektrischen Erfassung von Wärmeverlusten in einem strömenden Medium, mit einem vorzugsweise metallischen, kreiszylindrischen, mit einem Außengewinde versehenen Meßgerätgehäuse, mit einem ersten Temperaturmeßelement, mit mindestens einem Heizelement und mit einem zweiten Temperaturmeßelement.

Wärmeübergangsmeßgeräte der in Rede stehenden Art, also insbesondere kalorimetrisch arbeitende Strömungswächter, sind seit langem und in vielen Ausführungsformen bekannt (vgl. z. B. die DE-OSen 24 47 617, 26 29 051, 32 13 902 und 32 22 046). Bei diesen Wärmeübergangsmeßgeräten, im folgenden immer Strömungswächter genannt, arbeitet man mit einer Differenztemperaturmessung. Das erste Temperaturmeßelement mißt eine durch das Heizelement und durch das strömende Medium bestimmte Temperatur, im folgenden Meßtemperatur genannt, während das zweite Temperaturmeßelement eine von dem Heizelement möglichst nicht oder in anderer Weise und durch das Strömende Medium bestimmte Temperatur, im folgenden Referenztemperatur genannt, mißt. Zu Strömungswächtern der hier in Rede stehenden Art gehören also funktionsnotwendig das erste Temperaturmeßelement, das Heizelement und das zweite Temperaturmeßelement - sowie eine hier nicht weiter interessierende Auswerteschaltung.

Handelt es sich bei dem Medium, dessen Strömung überwacht werden soll, um ein Gas, so können die für die Funktion notwendigen Bauelemente - erstes Temperaturmeßelement, Heizelement und zweites Temperaturmeßelement - mehr oder weniger ungeschützt in den Gasstrom eingebracht werden. Soll jedoch die Strömung eines flüssigen Mediums überwacht werden, so können die für die Funktion notwendigen Bauelemente - erstes Temperaturmeßelement, Heizelement und zweites Temperaturmeßelement - nicht einfach in den Flüssigkeitsstrom eingebracht werden, vielmehr ist es dann erforderlich, diese Bauelemente geschützt in einem Meßgerätgehäuse anzuordnen.

Bei einem in der Praxis bereits realisierten Strömungswächter der eingangs beschriebenen Art (vgl. die DE-OS 32 13 902) ist das Meßgerätgehäuse abgesetzt ausgeführt; im dünneren Teil des Meßgerätgehäuses befindet sich das erste Temperaturmeßelement und das Heizelement, während sich das zweite Temperaturmeßelement im dickeren Teil des Meßgerätgehäuses, an seinem dem dünneren Teil zugewandten Ende, befindet. Das erste Temperaturmeßelement und das Heizelement sind in einer Aluminiumscheibe angeordnet; die Aluminiumscheibe stellt also die thermische Verbindung dar zwischen der Stirnseite des Meßgerätgehäuses und einerseits dem ersten Temperaturmeßelement und andererseits dem Heizelement. Das erste Temperaturmeßelement, das Heizelement und die Aluminiumscheibe sind mit einem thermisch gut leitenden Epoxydharz vergossen. Das zweite Temperaturmeßelement befindet sich in einem Abstand von ca. 1 cm von der Stirnseite des Meßgerätgehäuses entfernt, ebenfalls mit einem thermisch gut leitenden Epoxydharz vergossen. Da die Wärme des Heizelements das zweite Temperaturmeßelement nicht erreichen soll, befindet sich zwischen dem Bereich, in dem das erste Temperaturmeßelement und das Heizelement angeordnet sind, und dem Bereich, in dem das zweite Temperaturmeßelement angeordnet ist, thermisch gut isolierendes Material.

Der zuvor beschriebene Strömungswächter, von dem die Erfindung ausgeht, ist einerseits thermisch relativ träge, kann andererseits nur relativ aufwendig hergestellt werden, so daß der Erfindung die Aufgabe zugrundeliegt, einen Strömungswächter der in Rede stehenden Art anzugeben, der einerseits thermisch relativ schnell reagieren kann und der andererseits weniger aufwendig hergestellt werden kann.

Das erfindungsgemäße Wärmeübergangsmeßgerät, also der erfindungsgemäße Strömungswächter, bei dem die zuvor hergeleitete und dargelegte Aufgabe gelöst ist, ist nun zunächst und im wesentlichen dadurch gekennzeichnet, daß das erste Temperaturmeßelement, das Heizelement und das zweite Temperaturmeßelement auf einer Seite einer elektrisch gut isolierenden, thermisch gut leitenden Trägerfolie aufgebracht sind und die Trägerfolie mit ihrer den Temperaturmeßelementen und dem Heizelement abgewandten Seite zumindest in den Bereichen, in denen die Temperaturmeßelemente und das Heizelement aufgebracht sind, mit dem Meßgerätgehäuse in wärmeleitendem Kontakt gebracht ist. Vorzugsweise besteht dabei die Trägerfolie aus Polyimid und hat die Trägerfolie eine Dicke von ca. 50 - 150 µm, insbesondere von ca. 75 µm. Eine solche Trägerfolie hat einen extrem geringen thermischen Widerstand und ist elektrisch gut isolierend; die Durchschlagsspannung einer solchen Trägerfolie beträgt viele tausend Volt.

Dadurch, daß bei dem erfindungsgemäßen Strömungswächter die funktionsnotwendigen Bauelemente - erstes Temperaturmeßelement, Heizelement und zweites Temperaturmeßelement - thermisch praktisch direkt auf die entsprechenden Innenflächen des Meßgerätgehäuses aufgebracht werden können, ist der erfindungsgemäße Strömungswächter thermisch ausgesprochen flink. Da es bei dem erfindungsgemäßen Strömungswächter im Übrigen nicht erforderlich ist, die funktionsnotwendigen Bauelemente - erstes Temperaturmeßelement, Heizelement und zweites Temperaturmeßelement - mit einem thermisch gut leitenden Epoxydharz zu vergießen, kann der erfindungsgemäße Strömungswächter auch wesentlich weniger aufwendig hergestellt werden als der Strömungswächter, von dem die Erfindung ausgeht.

Im einzelnen kann nun die zuvor erläuterte wesentliche Lehre der Erfindung in unterschiedlicher Weise ausgestaltet und weitergebildet werden, was im folgenden anhand von zeichnerisch dargestellten Ausführungsbeispielen erläutert werden soll; es zeigt

Fig. 1    schematisch, einen Schnitt durch ein erstes Ausführungsbeispiel eines erfindungsgemäßen Strömungswächters,

Fig. 2    in gegenüber der Fig. 1 vergrößerter Darstellung, die Trägerfolie des Strömungswächters nach Fig. 1 mit den darauf angeordneten funktionsnotwendigen Bauelementen,

Fig. 3    schematisch, einen Schnitt durch ein zweites Ausführungsbeispiel eines erfindungsgemäßen Strömungswächters,

Fig. 4    in gegenüber der Fig. 3 vergrößerter Darstellung, die Trägerfolie des Strömungswächters nach Fig. 3 mit den darauf angeordneten funktionsnotwendigen Bauelementen,

Fig. 5    schematisch, einen Schnitt durch ein drittes Ausführungsbeispiel eines erfindungsgemäßen Strömungswächters und

Fig. 6    in vergrößerter Darstellung, die Trägerfolie eines vierten Ausführungsbeispiels eines erfindungsgemäßen Strömungswächters, teilweise mit den darauf angeordneten funktionsnotwendigen Bauelementen.

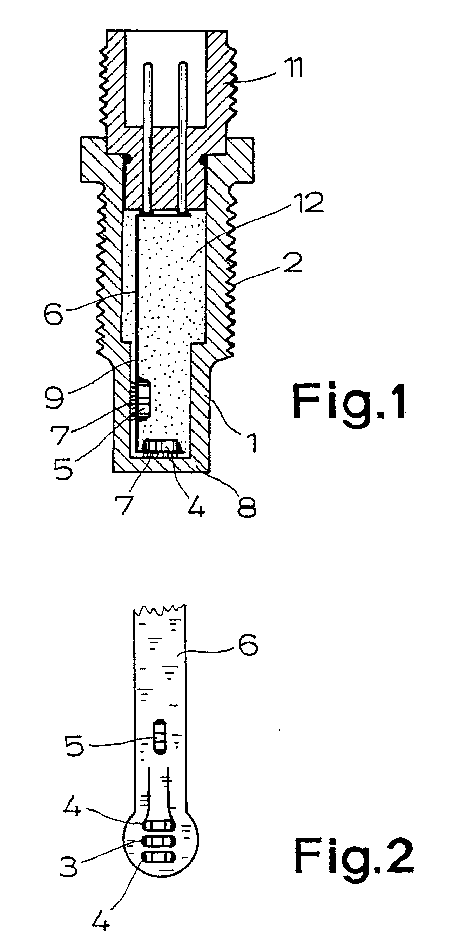

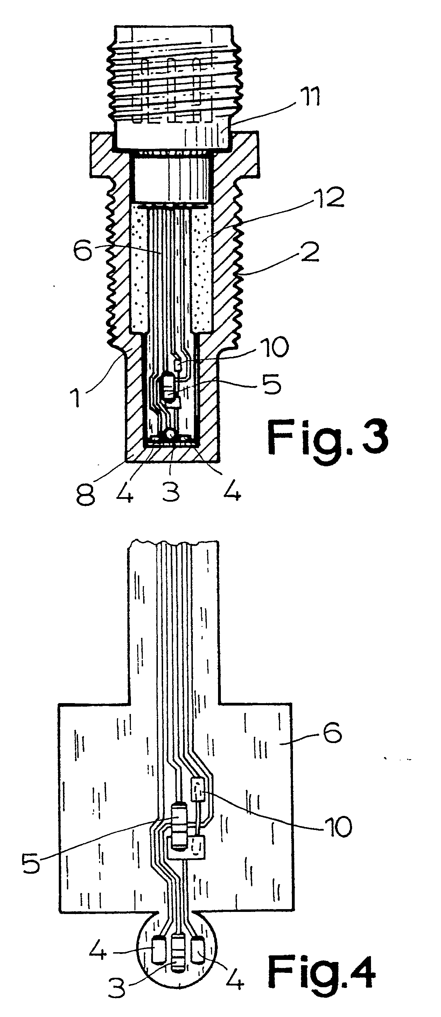

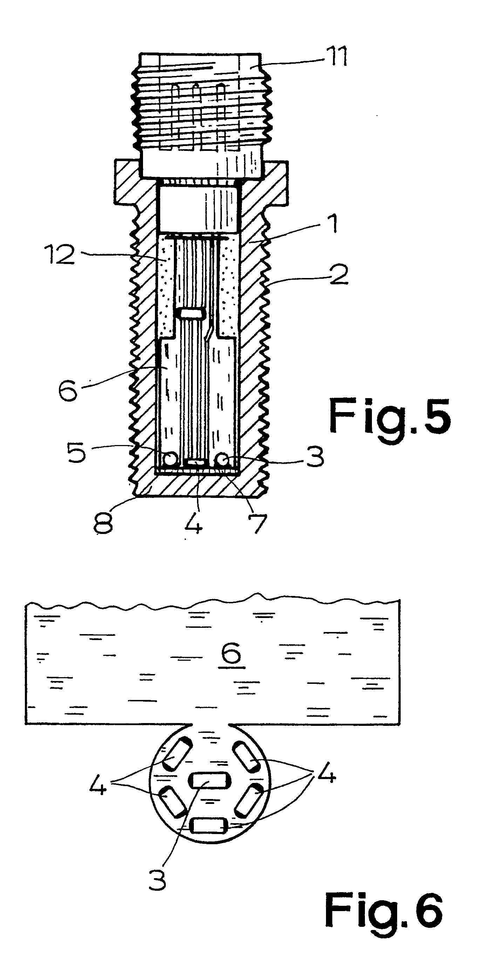

Das in den Figuren dargestellte Wärmeübergangsmeßgerät ist ein Strömungswächter zur elektrischen Erfassung von Wärmeverlusten in einem strömenden Medium und weist auf ein metallisches, kreiszylindrisches Meßgerätgehäuse 1, das teilweise (Fig. 1 und 3) bzw. ganz (Fig. 5) mit einem Außengewinde 2 versehen ist, ein erstes Temperaturmeßelement 3, ein Heizelement 4 und ein zweites Temperaturmeßelement 5. Die in den Figuren dargestellten Strömungswächter arbeiten nach dem Prinzip der Differenztemperaturmessung. Das erste Temperaturmeßelement 3 mißt eine durch das Heizelement 4 und durch das strömende Medium bestimmte Temperatur, im folgenden Meßtemperatur genannt, während das zweite Temperaturmeßelement 5 eine von dem Heizelement 4 möglichst nicht oder in anderer Weise und durch das strömende Medium bestimmte Temperatur, im folgenden Referenztemperatur genannt, mißt. Zu den dargestellten Strömungswächtern gehören also funktionsnotwendig das erste Temperaturmeßelement 3, das Heizelement 4 und das zweite Temperaturmeßelement 5.

Mit dem erfindungsgemäßen Strömungswächter soll die Strömung eines flüssigen Mediums (oder eines aggressiven Mediums) überwacht werden, so daß die für die Funktion notwendigen Bauelemente - erstes Temperaturmeßelement 3, Heizelement 4 und zweites Temperaturmeßelement 5 - nicht einfach in den Flüssigkeitsstrom eingebracht werden können, so daß die für die Funktion notwendigen Bauelemente in dem Meßgerätgehäuse 1 angeordnet sind.

Erfindungsgemäß sind das erste Temperaturmeßelement 3, das Heizelement 4 und das zweite Temperaturmeßelement 5 auf einer Seite einer elektrisch gut isolierenden, thermisch gut leitenden Trägerfolie 6 aufgebracht und ist die Trägerfolie 6 mit ihrer den Temperaturmeßelementen 3, 5 und dem Heizelement 4 abgewandten Seite - zumindest in den Bereichen, in denen die Temperaturmeßelemente 3, 5 und das Heizelement 4 aufgebracht sind - mit dem Meßgerätgehäuse 1 in wärmeleitendem Kontakt gebracht. Die Trägerfolie 6 besteht vorzugsweise aus Polyimid und hat eine Dicke von ca. 50 - 150 μm, insbesondere von ca. 75 μm.

Der erfindungsgemäße Strömungswächter ist thermisch ausgesprochen flink, weil das erste Temperaturmeßelement 3, das Heizelement 4 und das zweite Temperaturmeßelement 5 thermisch praktisch direkt auf den Innenflächen des Meßgerätgehäuses 1 angebracht sind. Um nun die thermische Leitfähigkeit zwischen dem ersten Temperaturmeßelement 3, dem Heizelement 4 und dem zweiten Temperaturmeßelement 5 einerseits sowie den Innenflächen des Meßgerätgehäuses 1 andererseits noch zu verbessern, ist in den Bereichen, in denen die Temperaturmeßelemente 3, 5 und das Heizelement 4 aufgebracht sind, zwischen der Trägerfolie 6 und dem Meßgerätgehäuse 1 Wärmeleitpaste 7 vorgesehen.

In dem in den Fig. 1 und 2 dargestellten Ausführungsbeispiel des erfindungsgemäßen Strömungswächters sind das erste Temperaturmeßelement 3 und das Heizelement 4 an der Stirnseite des Meßgerätgehäuses 1 angeordnet, während das zweite Temperaturmeßelement 5 mit Abstand von der Stirnseite 8 des Meßgerätgehäuses 1 am Zylindermantel 9 angeordnet ist. Wie die Fig. 2 zeigt, sind bei diesem Ausführungsbeispiel zwei Heizelemente 4 vorgesehen und ist das erste Temperaturmeßelement 3 zwischen den beiden Heizelementen 4 angeordnet. Demgegenüber zeigt Fig. 6 ein Ausführungsbeispiel, bei dem mehrere Heizelemente 4, nämlich fünf Heizelemente 4 vorgesehen sind und die Heizelemente 4 kreisförmig um das erste Temperaturmeßelement 3 herum angeordnet sind.

Im Gegensatz zum Ausführungsbeispiel nach den Fig. 1 und 2 zeigen die Fig. 3 bis 5 Ausführungsbeispiele des erfindungsgemäßen Strömungswächters, bei denen das erste Temperaturmeßelement 3, das Heizelement 4 und das zweite Temperaturmeßelement 5 an der Stirnseite 8 des Meßgerätgehäuses 1 angeordnet sind. Dabei ist jeweils das Heizelement 4 zwischen dem ersten Temperaturmeßelement 3 und dem zweiten Temperaturmeßelement 5 angeordnet. Es handelt sich hier um Ausführungsbeispiele von erfindungsgemäßen Strömungswächtern, mit denen nicht nur festgestellt werden kann, ob das Medium, dessen Strömung überwacht werden soll, auch tatsächlich strömt, vielmehr kann mit diesen Ausführungsbeispielen erfindungsgemäßer Strömungswächter auch die Richtung der Strömung festgestellt werden.

Bei allen in den Figuren dargestellten Ausführungsbeispielen erfindungsgemäßer Strömungswächter sind das erste Temperaturmeßelement 3, das Heizelement 4 bzw. die Heizelemente 4 und das zweite Temperaturmeßelement 5 als SMD-Bauelemente ausgeführt, und zwar teilweise als MELF-Bauelemente, teilweise als Chip-Bauelemente. Insoweit, als das erste Temperaturmeßelement 3, das Heizelement 4 bzw. die Heizelemente 4 und das zweite Temperaturmeßelement 5 als Chip-Bauelemente ausgeführt sind, sind sie mit der Meßschicht bzw. mit der Heizschicht auf der Trägerfolie 6 liegend angeordnet (face down).

Wesentliche Lehre der Erfindung ist, daß eine elektrisch gut isolierende, thermisch gut leitende Trägerfolie 6 vorgesehen ist, auf der das erste Temperaturmeßelement 3, das Heizelement 4 und das zweite Temperaturmeßelement 5 aufgebracht sind. Folglich bietet es sich an, auf der Trägerfolie 6 weitere Bauelemente, vorzugsweise weitere SMD-Bauelemente 10 vorzusehen, was den Fig. 3 und 4 entnommen werden kann.

Schließlich zeigen die Figuren insoweit bevorzugte Ausführungsbeispiele erfindungsgemäßer Strömungswächter, als einerseits die Trägerfolie 6 direkt mit einem Anschlußstecker 11 verbunden ist, als andererseits der Innenraum des Meßgerätgehäuses 1 mit einem thermisch gut isolierenden Material 12 ausgefüllt ist, vorzugsweise mit Polyurethanschaum.

## Patentansprüche

1. Wärmeübergangsmeßgerät, insbesondere Strömungswächter zur elektrischen Erfassung von Wärmeverlusten in einem strömenden Medium, mit einem vorzugsweise metallischen, kreiszylindrischen, mit einem Außengewinde versehenen Meßgerätgehäuse, mit einem ersten Temperaturmeßelement, mit mindestens einem Heizelement und mit einem zweiten Temperaturmeßelement, **dadurch gekennzeichnet,** daß das erste Temperaturmeßelement (3), das Heizelement (4) und das zweite Temperaturmeßelement (5) auf einer Seite einer elektrisch gut isolierenden, thermisch gut leitenden Trägerfolie (6) aufgebracht sind und die Trägerfolie (6) mit ihrer den Temperaturmeßelementen (3, 5) und dem Heizelement (4) abgewandten Seite zumindest in den Bereichen, in denen die Temperaturmeßelemente (3, 5) und das Heizelement (4) aufgebracht sind, mit dem Meßgerätgehäuse (1) in wärmeleitenden Kontakt gebracht ist.

2. Wärmeübergangsmeßgerät nach Anspruch 1, dadurch gekennzeichnet, daß die Trägerfolie (6) aus Polyimid besteht.

3. Wärmeübergangsmeßgerät nach Anspruch 1 oder 2, dadurch gekennzeichnet, daß die Trägerfolie (6) eine Dicke von ca. 50 - 150 $\mu$m, insbesondere von ca. 75 $\mu$m hat.

4. Wärmeübergangsmeßgerät nach einem der Ansprüche 1 bis 3, dadurch gekennzeichnet, daß zumindest in den Bereichen, in denen die Temperaturmeßelemente (3, 5) und das Heizelement (4) aufgebracht sind, zwischen der Trägerfolie (6) und dem Meßgerätgehäuse (1) Wärmeleitpaste (7) vorgesehen ist.

5. Wärmeübergangsmeßgerät nach einem der Ansprüche 1 bis 4, dadurch gekennzeichnet, daß das erste Temperaturmeßelement (3) und das Heizelement (4) an der Stirnseite (8) des Meßgerätgehäuses (1) sowie das zweite Temperaturmeßelement (5) mit Abstand von der Stirnseite (8) des Meßgerätgehäuses (1) am Zylindermantel (9) des Meßgerätgehäuses (1) angeordnet sind.

6. Wärmeübergangsmeßgerät nach Anspruch 5, dadurch gekennzeichnet, daß zwei Heizelemente (4) vorgesehen sind und das erste Temperaturmeßelement (3) zwischen den beiden Heizelementen (4) angeordnet ist.

7. Wärmeübergangsmeßgerät nach Anspruch 5, dadurch gekennzeichnet, daß mehrere Heizelemente (4) vorgesehen sind und die Heizelemente (4) kreisförmig um das erste Temperaturmeßelement (3) herum angeordnet sind.

**8.** Wärmeübergangsmeßgerät nach einem der Ansprüche 1 bis 4, dadurch gekennzeichnet, daß das erste Temperaturmeßelement (3), das Heizelement (4) und das zweite Temperaturmeßelement (5) an der Stirnseite (8) des Meßgerätgehäuses (1) angeordnet sind.

**9.** Wärmeübergangsmeßgerät nach Anspruch 8, dadurch gekennzeichnet, daß das Heizelement (4) zwischen den beiden Temperaturmeßelementen (3, 5) angeordnet ist.

**10.** Wärmeübergangsmeßgerät nach einem der Ansprüche 1 bis 9, dadurch gekennzeichnet, daß das erste Temperaturmeßelement (3), das Heizelement (4) bzw. die Heizelemente (4) und/oder das zweite Temperaturmeßelement (5) als SMD-Bauelemente ausgeführt sind.

**11.** Wärmeübergangsmeßgerät nach Anspruch 10, dadurch gekennzeichnet, daß das erste Temperaturmeßelement (3), das Heizelement (4) bzw. die Heizelemente (4) und/oder das zweite Temperaturmeßelement (5) als MELF-Bauelemente ausgeführt sind.

**12.** Wärmeübergangsmeßgerät nach Anspruch 10 oder 11, dadurch gekennzeichnet, daß das erste Temperaturmeßelement (3), das Heizelement (4) bzw. die Heizelemente (4) und/oder das zweite Temperaturmeßelement (5) als Chip-Bauelemente ausgeführt sind.

**13.** Wärmeübergangsmeßgerät nach Anspruch 12, dadurch gekennzeichnet, daß das erste Temperaturmeßelement (3), das Heizelement (4) bzw. die Heizelemente (4) und/oder das zweite Temperaturmeßelement (5) mit der Meßschicht bzw. mit der Heizschicht auf der Trägerfolie (6) liegend angeordnet sind.

**14.** Wärmeübergangsmeßgerät nach einem der Ansprüche 1 bis 13, dadurch gekennzeichnet, daß auf der Trägerfolie (6) weitere Bauelemente, vorzugsweise weitere SMD-Bauelemente (10) vorgesehen sind.

**15.** Wärmeübergangsmeßgerät nach einem der Ansprüche 1 bis 14, dadurch gekennzeichnet, daß die Trägerfolie (6) direkt mit einem Anschlußstecker (11) verbunden ist.

**16.** Wärmeübergangsmeßgerät nach einem der Ansprüche 1 bis 15, dadurch gekennzeichnet, daß der Innenraum des Meßgerätgehäuses (1) mit einem thermisch gut isolierenden Material (12), vorzugsweise mit Polyurethanschaum, ausgefüllt ist.

**Claims**

**1.** A heat transfer measuring equipment, particularly a flow monitor for the electrical detection of heat losses in a flowing medium, with a preferably metallic cylindrical measuring equipment housing provided with an external thread, with a first temperature measuring unit, with at least one heating unit and with a second temperature measuring unit, *characterized in that* the first temperature measuring unit (3), the heating unit (4) and the second heat measuring unit (5) are applied to one side of a carrier foil (6) that is a good electrical insulator and a good heat conductor and, at least in those areas to which the temperature measuring units (3, 5) and the heating unit (4) are applied, the side of the carrier foil (6) facing away from the temperature measuring units (3, 5) and the heating unit (4) is brought into heat-conducting contact with the measuring equipment housing (1).

**2.** A heat transfer measuring equipment according to Claim 1, *characterized in that* the carrier foil (6) consists of polyimide.

**3.** A heat transfer measuring equipment according to Claim 1 or 2, *characterized in that* the carrier foil (6) has a thickness of about 50 - 150 $\mu$m, particularly of about 75 $\mu$m.

**4.** A heat transfer measuring equipment according to one of Claims 1 to 3, *characterized in that,* at least in those areas in which the temperature measuring units (3, 5) and the heating unit (4) are applied, a heat-conducting paste (7) is provided between carrier foil (6) and measuring equipment housing (1).

**5.** A heat transfer measuring equipment according to one of Claims 1 to 4, *characterized in that* the first temperature measuring unit (3) and the heating unit (4) are arranged on the front side (8) of the measuring equipment housing (1) and the second temperature measuring unit (5) is located on the cylindrical jacket (9) of measuring equipment housing (1), with a spacing from the front side (8) of the measurement housing (1).

**6.** A heat transfer measuring equipment according to Claim 5, *characterized in that* two heating units (4) are provided and the first temperature measuring unit (3) is located between the two heating units (4).

**7.** A heat transfer measuring equipment according to Claim 5, *characterized in that* several heating units (4) are provided and are arranged in a circular pattern around the first temperature measuring unit (3).

8. A heat transfer measuring equipment according to one of Claims 1 to 4, *characterized in that* the first temperature measuring unit (3), the heating unit (4) and the second temperature measuring unit (5) are arranged on the front side (8) of the measuring equipment housing (1).

9. A heat transfer measuring equipment according to Claim 8, *characterized in that* the heating unit (4) is located between the two temperature measuring units (3, 5).

10. A heat transfer measuring unit according to one of Claims 1 to 9, *characterized in that* the first temperature measuring unit (3), the heating unit (4) or heating units (4) and/or the second temperature measuring unit (5) are constructed as SMD constructional units.

11. A heat transfer measuring unit according to Claim 10, characterized in that the first temperature measuring unit (3), the heating unit (4) or heating units (4) and/or the second temperature measuring unit (5) are constructed as MELF constructional units.

12. A heat transfer measuring unit according to Claim 10 or 11, characterized in that the first temperature measuring unit (3), the heating unit (4) or heating units (4) and/or the second temperature measuring unit (5) are constructed as chip constructional units.

13. A heat transfer measuring unit according to Claim 12, *characterized in that* the first temperature measuring unit (3), the heating unit (4) or heating units (4) and/or the second temperature measuring unit (5) are arranged with the measuring layer or the heating layer lying face down on carrier foil (6).

14. A heat transfer measuring unit according to one of Claims 1 to 13, *characterized in that* further constructional units, preferably further SMD constructional units (10) are provided on carrier foil (6).

15. A heat transfer measuring equipment according to one of Claims 1 to 14, *characterized in that* the carrier foil (6) is directly connected to a connection plug (11).

16. A heat transfer measuring equipment according to one of Claims 1 to 15, *characterized in that* the interior of the measuring equipment housing is filled with a good heat-insulation material, preferably with polyurethane foam.

**Revendications**

1. Appareil de mesure de transfert thermique notamment contrôleur d'écoulement, pour la détection électrique de pertes de chaleur dans un milieu en écoulement, comportant un boîtier en forme de cylindre circulaire, de préférence métallique, pourvu d'un filetage extérieur, un premier élément de mesure de température, au moins un élément chauffant et un second élément de mesure de température, caractérisé en ce que le premier élément de mesure de température (3), l'élément chauffant (4) et le second élément de mesure de température (5) sont disposés sur une face d'une feuille de support (6) qui réalise une bonne isolation électrique et une bonne conduction thermique, et que la feuille de support (6) est placée en contact thermoconducteur avec le boîtier (1) de l'appareil de mesure, par sa face tournée à l'opposé des éléments de mesure de température (3,5) et de l'élément chauffant (4), dans les zones, dans lesquelles sont disposés les éléments de mesure de température (3,4) et l'élément chauffant (4).

2. Appareil de mesure de transfert thermique selon la revendication 1, caractérisé en ce que la feuille de support (6) est réalisée en polyimide.

3. Appareil de mesure de transfert thermique selon la revendication 1 ou 2, caractérisé en ce que la feuille de support (6) possède une épaisseur comprise entre environ 50-150 $\mu$m et égale notamment à environ 75 $\mu$m.

4. Appareil de mesure de transfert thermique selon l'une des revendications 1 à 3, caractérisé en ce qu'au moins dans les zones dans lesquelles les éléments de mesure de température (3,5) et l'élément chauffant (4) sont déposés, une pâte thermoconductrice (7) est disposée entre la feuille de support (6) et le boîtier (1) de l'appareil de mesure.

5. Appareil de mesure de transfert thermique selon l'une des revendications 1 à 4, caractérisé en ce que le premier élément de mesure de température (3) et l'élément chauffant (4) sont disposés sur la face frontale (8) du boîtier (1) de l'appareil de mesure et que le second élément de mesure de température (5) est disposé à distance de la face frontale (8) du boîtier (1) de l'appareil de mesure, sur l'enveloppe cylindrique (9) de ce boîtier.

6. Appareil de mesure de transfert thermique selon la revendication 5, caractérisé en ce qu'il est prévu deux éléments chauffants (4) et que le premier élément de mesure de température (3) est disposé entre les deux éléments chauffants (4).

7. Appareil de mesure de transfert thermique selon la revendication 5, caractérisé en ce qu'il est prévu plusieurs éléments chauffants (4) et que ces derniers sont disposés en cercle autour du premier élément de mesure de température (3).

8. Appareil de mesure de transfert thermique selon l'une des revendications 1 à 4, caractérisé en ce que le premier élément de mesure de température (3), l'élément chauffant (4) et le second élément de mesure de température (5) sont disposés sur la face frontale (8) du boîtier (1) de l'appareil de mesure.

9. Appareil de mesure de transfert thermique selon la revendication 8, caractérisé en ce que l'élément chauffant (4) est disposé entre les deux éléments de mesure de température (3,5).

10. Appareil de mesure de transfert thermique selon l'une des revendications 1 à 9, caractérisé en ce que le premier élément de mesure de température (3), l'élément chauffant (4) ou les éléments chauffants (4) et/ou le second élément de mesure de température (5) sont réalisés sous la forme de composants (SMD).

11. Appareil de mesure de transfert thermique selon la revendication 10, caractérisé en ce que le premier élément de mesure de température (3), l'élément chauffant (4) ou les éléments chauffants (4) et/ou le second élément de mesure de température (5) sont réalisés sous la forme de composants MELF.

12. Appareil de mesure de transfert thermique selon la revendication 10 ou 11, caractérisé en ce que le premier élément de mesure de température (3), l'élément chauffant (4) ou les éléments chauffants (4) et/ou le second élément de mesure de température (5) sont réalisés sous la forme de composants à microplaquettes.

13. Appareil de mesure de transfert thermique selon la revendication 12, caractérisé en ce que le premier élément de mesure de température (3), l'élément chauffant (4) ou les éléments chauffants (4) et/ou le second élément de mesure de température (5) sont disposés de telle sorte que la couche de mesure ou la couche chauffante s'étend sur la feuille de support (6).

14. Appareil de mesure de transfert thermique selon l'une des revendications 1 à 13, caractérisé en ce que d'autres composants, de préférence d'autres composants SMD (10) sont prévus sur la feuille de support (6).

15. Appareil de mesure de transfert thermique selon l'une des revendications 1 à 14, caractérisé en ce que la feuille de support (6) est raccordée directement à un connecteur (11).

16. Appareil de mesure de transfert thermique selon l'une des revendications 1 à 15, caractérisé en ce que l'espace intérieur du boîtier (1) de l'appareil de mesure est rempli par un matériau isolant (12) réalisant une bonne isolation thermique, de préférence une mousse de polyuréthane.

Fig.1

Fig.2

# Fig.3

# Fig.4

Fig.5

Fig.6